# EUROPÄISCHE PATENTSCHRIFT

(11) **EP 0 419 932 B1**
(45) Veröffentlichungstag und Bekanntmachung des Hinweises auf die Patenterteilung: **05.04.2000**
(21) Anmeldenummer: 90117467.2
(22) Anmeldetag: 11.09.1990
(51) Int. Cl.: G06F 9/46, G06F 1/32

(54) **Steuerung der zeitlichen Zuordnung von Datenverarbeitungsleistung einer Rechenanlage**
Control of the allocation in time of data processing power in a computer system
Commande de l'allocation temporelle de puissance de traitement de données d'un système d'ordinateur

(30) Priorität: 25.09.1989 DE 3931924
(43) Veröffentlichungstag der Anmeldung: 03.04.1991
(73) Patentinhaber: ALCATEL, 75008 Paris (FR)
(72) Erfinder: Wajda, Wieslawa, D-7538 Keltern-Dtl. (DE)
(74) Vertreter: Knecht, Ulrich Karl, Dipl.-Ing.

(56) Entgegenhaltungen:
- US-A- 4 747 041
- US-A- 4 809 163
- R.M. McKEAG et al.: "Studies in operating systems", 1976, Seiten 86-87,205-209, Academic Press, Londen, GB

## Beschreibung

Die Erfindung betrifft ein Verfahren zur Steuerung der zeitlichen Zuordnung von Datenverarbeitungsleistung einer Rechenanlage gemäß dem Oberbegriff des Anspruchs 1. Außerdem betrifft die Erfindung eine Rechenanlage zur Durchführung dieses Verfahrens gemäß dem Oberbegriff des Anspruchs 3.

Es sind bereits Rechenanlagen mit mehreren Mikroprozessoren bekannt, von denen jeder einen oder einen Teil der zu verarbeitenden Aufträge verarbeitet. Die Verteilung der Aufträge auf die Prozessoren wird von einem Betriebsprogramm der Rechenanlage entsprechend vorgebbarer Prioritäten gesteuert ("Entwurf und Realisierung des schnellen, flexiblen und fehlertoleranten Polyprozessors Heidelberger POLYP, von R. Männer, W. Saaler, T. Sauer, P. von Walter; Elektronische Rechenanlagen 24. Jahrgang 1982 Heft 4).

Aus "Studies in operating system" von R. M. Makeag et al., 1976, Academic Press London, GB, Seiten 86-87 und 205-209 ist desweiteren eine Rechenanlage bekannt, bei der ein Benutzer seinen durch die Rechenanlage zu bearbeitenden Aufträgen verschiedene Prioritäten erteilen kann. Ein bestimmter Algorithmus steuert die Rechenanlage auf eine solche Weise, daß diese Aufträge in der Rangfolge der erteilten Prioritäten bearbeitet werden. Möchte der Benutzer beispielsweise einen langen Auftrag durch die Rechenanlage bearbeiten lassen, so kann ein solcher Auftrag in eine Warteschlange eingereiht und dann zu einer vorgegebenen anderen Zeit, z. B. nachts, bearbeitet werden. Der Benutzer hat bei dieser Rechenanlage keine Möglichkeit, die Bearbeitungszeit des Auftrages von sich aus zu bestimmen. Die Zeit, während der ein solcher Auftrag bearbeitet werden kann, wird ihm vorgegeben.

US-A-4,747,041 beschreibt die Abschaltung von Teilen der Rechenanlage in Abhängigkeit von Auftragstypen, die nur zu bestimmten Zeiten abgearbeitet werden.

Ferner ist es bekannt, zur Erreichung einer möglichst hohen Verarbeitungsleistung teure Hochgeschwindigkeitsbauelemente zu verwenden ("The Cray 1 Computer System" R.M. Russel, CACM Jan. 1987, Vol 21, S. 63 - 70).

Die technische Aufgabe gemäß der Erfindung besteht darin, ein Verfahren zur Steuerung der zeitlichen Zuordnung von Datenverarbeitungsleistung einer Rechenanlage zur optimalen und individuell wählbaren Bearbeitung von Aufträgen in der Zeitachse, sowie eine zur Durchführung dieses Verfahrens geeignete Rechenanlage anzugehen. Diese Aufgaben werden erfindungsgemäß durch die kennzeichnenden Merkmale der Patentansprüche 1 und 3 gelöst.

Die mit der Erfindung erzielbaren Vorteile bestehen insbesondere darin, daß es möglich ist, zwischen Aufträgen zu unterscheiden, deren Durchführung unbedingt sofort nowendig ist oder deren Verarbeitung zu einem beliebigen späteren Zeitpunkt, vorzugsweise dann, wenn die Rechenanlage von dem Benutzer nicht in Anspruch genommen wird, stattfinden kann. Dazu werden in letzterem Falle von dem Bediener bzw. dem Benutzer durch Eingabe eines Befehles oder durch Starten eines die Auslastung der Rechenanlage auswertenden Algorithmus oder durch das Betätigen des Schalters der Spannungsversorgung solche in der Zeit verschiebbare Aufträge abgearbeitet, und zwar solange, bis eine erneute Eingabe erfolgt.

Dies bedeutet gleichzeitig, daß die Rechenanlage flexibler für die Verarbeitung dringender Aufträge einsetzbar ist.

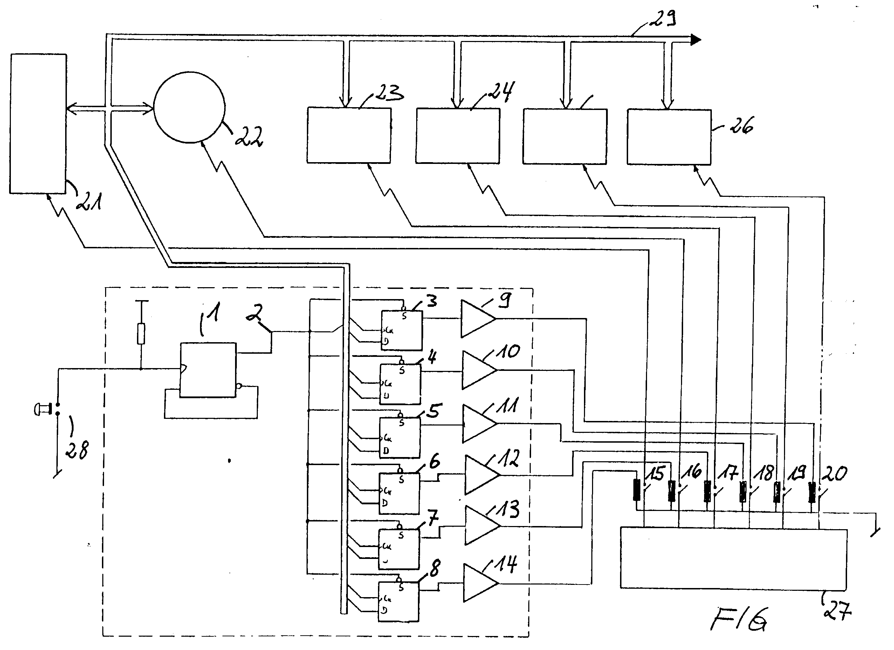

Weitere vorteilhafte Ausgestaltungen des Gegenstandes der Erfindung sind den Ansprüchen zu entnehmen. Im folgenden wird ein Ausführungsbeispiel anhand der Zeichnung erläutert.

In der Zeichnung ist ein Blockschaltbild einer Rechenanlage gemäß der Erfindung gezeigt.

Eine Rechenanlage, wie in der Figur gezeigt, weist einen Programmspeicher 21, eine Rechnereinheit, bestehend aus einem Prozessor 22, einem Plattenspeicher 23 und einem Diskettenspeicher 24 und einem die zuvor genannten Teile verbindenden Systembus 29 auf. Weiterhin sind eine übliche Tastatur und Bildschirmeinheit 25 sowie ein Drucker 26 mit dem Systembus 29 verbunden.

Gemäß der Erfindung ist eine Eingabeeinheit 28, hier ein Hauptschalter 28 für die Spannungsversorgung der Rechenanlage, mit einem Zustandsregister 1, hier ein D-Flip-Flop, verbunden. Das Zustandsregister 1 ist über eine Ansteuerleitung 2 mit dem Systembus 29 und mit Spannungsversorgungseinheiten für den Programmspeicher 21 und die Rechnereinheit 22,23,24, sowie für die Tastatur- und Bildschirmeinheit 25 und den Drucker 26 verbunden. Eine Spannungsversorgungseinheit besteht aus einem Ansteuerteil, d.h. aus einem D-Flip-Flop 3,4,5,6,7,8, dessen Setzeingang S mit der Steuerleitung 2 und dessen Dateneingang D mit dem Systembus 29 verbunden ist. Der Ausgang des D-Flip-Flops 3,4,5,6,7,8 ist über eine Leistungsverstärkerstufe 9,10,11,12,13,14 mit einem Schaltteil 15,16,17,18,19,20 der Spannungsversorgungseinheit verbunden. Das Schaltteil verbindet oder trennt eine Spannungsquelle 27 mit dem Programmspeicher 21, der Rechnereinheit 22,23,24, der Tastatur- und Bildschirmeinheit 25 und dem Drucker 26. Dabei ist es möglich jedes zuvor genannte Teil der Rechenanlage für sich mit der Spannungsquelle zu verbinden oder zu trennen. Die Schalteinheit 15,16,17,18,19,20 ist aus Relais aufgebaut.

In dem Programmspeicher 21 der Rechenanlage ist auch das Betriebsprogramm abgespeichert, sowie die abzuarbeitenden Programme und Teile der verarbeiteten Daten. Der Mikroprozessor 22 führt die im Programmspeicher 21 abgelegten Programme aus. Der Plattenspeicher 23 und der Diskettenspeicher 24 dienen als externer Massenspeicher für weitere Programme und Daten.

Zur Erläuterung des erfindungsgemäßen Verfahrens wird vorausgesetzt, daß das Zustandsregister 1 immer mit Spannung versorgt ist.

Zur Steuerung der zeitlichen Zuordnung von Datenverarbeitungsleistung der Rechenanlage zur optimalen Verteilung von Aufträgen in der Zeitachse wird all denjenigen Aufträgen, die zeitlich beliebig verschiebbar sind, eine einen speziellen Verarbeitungszustand kennzeichnende Information zugeordnet. Solche Aufträge sind z.B. die Verwaltung von Datenbeständen zu aktualisieren oder zu optimieren. Ferner extrem zeitaufwendige Aufträge, die aus dem direkten Programmfluß, in dem die Rechenergebnisse erzeugt werden, ausgeklammert und als selbständige Aufgaben in der Rechenanlage verwaltet werden, abzuarbeiten.

Im Normalbetrieb erfolgt zunächst durch Betätigung des Hauptschalters 28 durch einen Benutzer das Einschalten der Spannungsversorgung der Rechenanlage. Die Eingabe "Betätigung des Hauptschalters" hat zur Folge, daß das Zustandsregister 1 den Zustand "FALSE" annimmt, wodurch über die Steuerleitung 2 gesteuert, die Spannungsversorgungseinheit alle Teile der Rechenanlage mit Spannung für den Normalbetrieb versorgt. Im Normalbetrieb werden alle nicht speziell gekennzeichneten Aufträge, die so optimierbar sind, daß nur die unbedingt notwendigen Rechenoperationen durchgeführt werden, bearbeitet.

Wenn der Benutzer seine dringlichen Aufträge abgearbeitet bekommen hat, wird durch die Betätigung des Hauptschalters 28 der Rechenanlage signalisiert, daß deren Verarbeitungsleistung momentan nicht mehr benötigt wird.

Mit der Betätigung des Hauptschalters 28 geht das Zustandsregister 1 in den Zustand "TRUE" über. Dadurch erfolgt eine Unterbrechungsanforderung zum Mikroprozessor 22. Dieser überprüft den Zustand des Zustandsregisters 1 und aufgrund des anliegenden Zustandes "TRUE" werden jetzt, gesteuert über das Betriebsprogramm, nur die Aufträge abgearbeitet, die eine spezielle Kennzeichnung aufweisen. Diese Bearbeitung kann somit vorzugsweise in solchen Zeiten erfolgen, in denen der Benutzer für langere Zeiten nicht anwesend ist, wie z.B. Nachts, an Feiertagen und Sonntagen.

Während der Bearbeitung dieser Aufträge können, gesteuert durch den Mikroprozessor 22, alle Teile der Rechenanlage die nicht benötigt werden, wie Tastatur-und Bildschirmeinheit 25 und Drucker 26 über die Spannungsversorgungseinheiten abgetrennt werden.

Erfolgt eine erneute Eingabe durch den Benutzer, d.h. eine Betätigung des Hauptschalters 28, so nimmt das Zustandsregister 1 erneut den Zustand "FALSE" an, wodurch über eine Unterbrechungsanforderung zum Mikroprozessor wieder in den Normalbetrieb umgeschaltet wird. Gleichzeitig werden alle Teile der Rechenanlage über die Spannungsversorgungseinheiten angeschaltet.

Somit sind individuell auf die Bedürfnisse eines Benutzers abgestimmte Aufträge beliebig in der Zeit verschiebbar, um eine möglichst optimale Auslastung der Rechenanlage zu erreichen.

Anstelle der Betätigung des Hauptschalters durch den Benutzer, kann selbstverständlich auch eine beliebig vorgebbare Eingabe über die Tastatur- und Bildschirmeinheit zum Setzen des Zustandsregisters 1 erfolgen.

## Patentansprüche

1. Verfahren zur Steuerung der zeitlichen Zuordnung von Datenverarbeitungsleistung einer Rechenanlage zur Bearbeitung dringlicher Aufträge und zeitlich beliebig verschiebbarer Aufträge eines Benutzers, wobei den zeitlich beliebig verschiebbaren Aufträgen eine spezielle Kennung zugeordnet wird, **dadurch gekennzeichnet,** daß die Rechenanlage durch eine individuelle Eingabe des Benutzers zu einer beliebigen Zeit zur Bearbeitung dieser gekennzeichneten Aufträge aktiviert wird, wobei während der Bearbeitung der gekennzeichneten Aufträge alle Teile der Rechenanlage, die für die Bearbeitung nicht benötigt werden, durch ein Betriebsprogramm der Rechenanlage deaktiviert werden, und daß aufgrund einer erneuten individuellen Eingabe des Benutzers zu einer beliebigen späteren Zeit Datenverarbeitungsleistung der Bearbeitung seiner dringlichen Aufträge zugewiesen wird.

2. Verfahren nach Anspruch 1, dadurch gekennzeichnet, daß die individuelle Eingabe des Benutzers
- durch Eingeben eines Befehles
- durch Starten eines die Auslastung der Rechenanlage auswertenden Algorithmus oder
- durch Betätigen eines Schalters für die Spannungsversorgung der Rechenanlage erfolgt.

3. Rechenanlage zur Durchführung des Verfahrens nach einem der Patentansprüche 1 oder 2 mit einem Programmspeicher (21) und einer Rechnereinheit (22, 23, 24), die untereinander mit einem Systembus (29) verbunden sind, gekennzeichnet durch ein mit einer Eingabeeinheit (28) und dem Systembus (29) verbundenes Zustandsregister (1) , wobei die Eingabeeinheit (28) zur Aktivierung der Rechnereinheit (22, 23, 24) durch einen Benutzer mittels des Zustandsregisters (1) entweder zur Bearbeitung der zeitlich beliebig verschiebbaren Aufträge oder der dringlichen Aufträge vorgesehen ist.

## Claims

1. A method of controlling the temporal allocation of data processing capacity of a data processing system for the processing of a user's urgent jobs and jobs which can be arbitrarily shifted in time, wherein the jobs which can be arbitrarily shifted in time are assigned a special identification, characterised in that, by means of an individual input by the user at an arbitrary time, the data processing system is activated to process these identified jobs, all those parts of the data processing system not required for the processing being deactivated by an operating program of the data processing system during the processing of the identified jobs, and that as a result of a further individual input by the user at an arbitrary later time, data processing capacity is allocated to the processing of the user's urgent jobs.

2. A method according to Claim 1, characterised in that the individual input by the user takes place
- by the inputting of a command,
- by the starting of an algorithm which evaluates the utilization of the capacity of the data processing system or
- by the actuation of a switch for the voltage supply of the data processing system.

3. A data processing system for the implementation of the method according to one of Claims 1 or 2, comprising a program memory (21) and a computer unit (22, 23, 24) which are connected to one another by a system bus (29), characterised by a status register (1) which is connected to an input unit (28) and to the system bus (29), the input unit (28) being provided for the activation of the computer unit (22, 23, 24) by a user, via the status register (1), to process either the jobs which can be arbitrarily shifted in time or the urgent jobs.

## Revendications

1. Procédé de commande de l'allocation temporelle de la puissance de traitement de données d'un système d'ordinateur pour le traitement de tâches urgentes et de tâches d'un utilisateur pouvant être repoussées librement dans le temps, dans lequel un signe distinctif spécial est affecté aux tâches pouvant être librement repoussées dans le temps, caractérisé en ce que le système d'ordinateur est activé par une entrée individuelle de l'utilisateur à un moment quelconque pour le traitement de ces tâches repérées, à l'occasion de quoi toutes les parties du système d'ordinateur qui ne sont pas nécessaires pour le traitement sont désactivées par un programme d'exploitation du système d'ordinateur pendant le traitement des tâches repérées, et en ce que, du fait d'une nouvelle entrée individuelle de l'utilisateur à un moment ultérieur quelconque, la puissance de traitement de données est affectée au traitement de ses tâches urgentes.

2. Procédé selon la revendication 1, caractérisé en ce que l'entrée individuelle de l'utilisateur est effectuée
- par l'entrée d'une instruction
- par le lancement d'un algorithme analysant la charge de travail du système d'ordinateur
- par l'actionnement d'un interrupteur d'alimentation en tension du système d'ordinateur.

3. Système d'ordinateur pour l'exécution du procédé selon l'une des revendications 1 ou 2 avec une mémoire de programme (21) et une unité d'ordinateur (22, 23, 24), qui sont raccordées à un bus système (29), caractérisé par un registre d'état (1) raccordé à une unité d'entrée (28) et au bus système (29), l'unité d'entrée (28) étant prévue pour l'activation de l'unité d'ordinateur (22, 23, 24) par un utilisateur au moyen du registre d'état (1) soit pour le traitement des tâches pouvant être librement repoussées dans le temps, soit pour le traitement des tâches urgentes.
